# EUROPEAN PATENT APPLICATION

(11) **EP 4 307 604 A1**
(43) Date of publication of application: **17.01.2024**
(21) Application number: 22184457.4
(22) Date of filing: 12.07.2022
(51) Int. Cl.: H04L 9/00, H04L 9/32

(54) **CRYPTOGRAPHICALLY SECURE DERIVED PROCESS DATA**

(71) Applicant: Riddle & Code GmbH, 1100 Wien (AT)
(72) Inventor: FÜRSTNER, Thomas, Madliena, 1102 (MT)
(74) Representative: SONN Patentanwälte GmbH & Co KG

(57) **Abstract**

Method and system for generating a cryptographically secure derived process data, the method comprising: performing a measurement of a process parameter using a sensor (5), cryptographically attesting the measurement outcome (6) using a digital identity (7) associated with the sensor (5), submitting the attested measurement outcome (10) to a ledger database (3), receiving the attested measurement outcome (10) by a processor (4), computing a computation result (13) from the attested measurement outcome (10) and at least one computation instruction, digitally signing the computation result (13) using a digital identity (14) associated with the processor (4), submitting the signed computation result (15) to the ledger database (3).

## Description

The present invention concerns a method for generating a cryptographically secure derived process data, a use of such a method for generating a quality certificate for a product of a production process, as well as a system comprising a production facility and configured for applying such a method.

Traditionally, raw and derived process data have been treated confidential. All or some information about a production process of a product or an article or about a performance of a product (e.g., a product performing processing during operation) is generally inaccessible even to the owner or operator of the product or article. Trust in the properties and quality of the product or article or in its performance thus must be conveyed by testing. For example, quality certificates by trusted quality assurance authorities or test reports by trusted test facilities need to be taken into account and relied upon.

In principle, ledger databases such as blockchain-backed systems provide exceptional traceability and for this reason are a natural fit for quality control purposes. Such a system is described in US 2021/0278826 A1.

However, conventional blockchain-backed systems achieve trust by making public any and all information necessary to reproduce the content and therefore state of the blockchain. More specifically, any derived data, usually referred to as "transactions", receives trust by the fact that the derivation, including inputs and outputs, can be reproduced and checked by anyone participating in the blockchain. Under those circumstances, the steps necessary to perform the derivation must be also public.

It is an object of the invention, to provide a traceable and trusted system and methodology based on a ledger database while at the same time allowing for confidentiality of the process data stored on the ledger database and/or of the computations used to generate derived process data stored on the ledger database.

The disclosed method for generating a cryptographically secure derived process data comprises: performing a measurement of a process parameter using a sensor; cryptographically attesting the measurement outcome using a digital identity associated with the sensor; submitting the attested measurement outcome to a ledger database; receiving the attested measurement outcome by a processor; computing a computation result from the attested measurement outcome and at least one computation instruction; digitally signing the computation result using a digital identity associated with the processor; and submitting the signed computation result to the ledger database.

The measurement can be, e.g., pressure, temperature, weight, duration, flow rate, speed, power, voltage, position or distance, angle, force or generally any parameter related to the quality or performance of a product or process. Cryptographical attestation can be achieved by a digital signature of the measurement outcome and/or by encryption of the measurement outcome with a private signing and/or encryption key, respectively. Submission to the ledger database includes uploading the actual data, such as the attested measurement outcome or the signed computation result, to the ledger database or uploading the actual data to a storage service separate from the ledger database and uploading to the ledger database a cryptographic hash referencing the data uploaded to the storage service. The processor can be a processing entity or processing service provided separate from the sensor and/or the ledger database. Trust in the computation result is conveyed not through a structural relationship between the processor and the ledger database, but through the digital identity of the processor and its authentication.

The signed computation result may be submitted to the ledger database together with references to the attested measurement outcome in the ledger database.

The at least one computation instruction may comprise a sensor reference to the digital identity associated with the sensor, wherein receiving the measurement outcome includes querying the ledger database for the most recent signed measurement outcome submitted by the sensor referenced by the sensor reference. The computation might be triggered by the sensor. The sensor may be configured to send a push notification to the processor. Alternatively, the processor may be polling the ledger database for new data from the sensor.

After receiving the attested measurement outcome by a processor and before digitally signing the computation result the processor may verify the validity of the attestation of the attested measurement outcome. This may include verifying a digital signature with a corresponding public key. Or decrypting an encrypted measurement outcome with an expected decryption key and checking for validity of the decrypted result.

The sensor may be a gauge calibrated and attested by a sensor certification authority, wherein the cryptographical attestation of the measurement outcome comprises a digital signature of the measurement outcome by the digital identity associated with the sensor, and wherein the digital identity associated with the sensor is certified by the sensor certification authority.

The processor may store a whitelist of sensor certification authorities, wherein the processor verifying the validity of the signature of the measurement outcome includes verifying that the digital identity of the sensor is certified by a valid certificate issued by one of the certification authorities on the whitelist.

The attested measurement outcome may be an encrypted version of the measurement outcome provided by the sensor, wherein the encryption key is cryptographically associated with the digital identity associated with the sensor.

The attested measurement outcome may be obtained using a homomorphic encryption scheme, and wherein the at least one computation instruction is a homomorphic operation. The homomorphic encryption scheme may be a Paillier cryptosystem. After receiving the attested measurement outcome by a processor and before computing the computation result, the processor may perform a filtering and selecting of the attested measurement outcome, wherein the filtering and selecting comprises decrypting the attested measurement outcome, and applying one or more predefined filtering criteria to the decrypted measurement outcome, wherein submitting the signed computation result computed from the attested measurement outcome is in response to the corresponding measurement outcome passing the one or more filtering criteria. The filtering may include selecting or rejecting a measurement outcome or computation result according to certain predefined criteria. When the criteria are not met, the instance can be rejected and the processing aborted, such that nothing is submitted to the ledger database.

The method may comprise retrieving the signed computation result from the ledger database, receiving an unblinding key which corresponds to the encryption key cryptographically associated with the digital identity associated with the sensor, and decrypting the computation result using the unblinding key to obtain an unblinded computation result.

The at least one computation instruction may comprise a type constraint defining an acceptable measurement type of the measurement outcome, wherein the certificate of the digital identity associated with the sensor defines the measurement type for which the gauge is calibrated and attested, wherein before computing the computation result the processor verifies that the type constraint is respected.

The processor may be implemented in a trusted execution environment. The trusted execution environment (TEE) protects the executed instructions (program or code) and the processed data with respect to confidentiality and integrity. It prevents unauthorized alteration of the processed data before, during and after processing by any entity outside the TEE.

The at least one computation instruction may be locked inside the trusted execution environment. In this case, the TEE ensures that the instructions in the TEE cannot be replaced or modified by unauthorized entities.

Before computing the computation result the processor may receive the at least one computation instruction, wherein the at least one computation instruction is digitally signed, and the processor verifies the validity of the signature of the at least one computation instruction.

The processor may verify the validity of the signature of the at least one computation instruction includes verifying that the digital identity associated with the signature is certified by a valid certificate issued by a certification authority on a whitelist of instruction certification authorities stored by the processor.

The attested measurement outcome may be submitted to the ledger database together with one or more measurement parameters selected from a group comprising: timestamp, geographic location, ambient temperature, ambient pressure, error message of the sensor, warning message of the sensor.

The method disclosed above may be used for generating a quality certificate for a product of a production process, in particular in the production of a material, e.g., processing of raw materials to processed materials. For example, the use may be in the production of steel or plastics or a 3D product (e.g., referencing used 3D "ink"). This use has the advantage that otherwise necessary destructive testing can be avoided.

In this use, the signed computation result may be submitted to the ledger database together with a product identifier.

The submission of the signed computation result and the product identifier may have the form of a transaction to a digital identity of a producer of the product.

The disclosure also concerns a method for initializing a system, for example a process for the setup of the data generating entities, such as the sensors and processors, including their attestation.

Finally, the disclosure concerns a system comprising a production facility having at least one sensor and at least one processor, wherein the production facility is configured for performing a production process, wherein the sensor is configured for performing a measurement of a process parameter of the production process and cryptographically attesting the measurement outcome using a digital identity associated with the sensor and submitting the attested measurement outcome to a ledger database, wherein the processor is configured for receiving the attested measurement outcome and computing a computation result from the attested measurement outcome and at least one computation instruction and digitally signing the computation result using a digital identity associated with the processor and submitting the signed computation result to the ledger database.

Referring now to the drawings, wherein the figures are for purposes of illustrating the present invention and not for purposes of limiting the same,
Fig. 1 schematically shows a first embodiment of the present disclosure, wherein a computation result is computed from a single measurement outcome and submitted to a ledger database;
Fig. 2 schematically shows a second embodiment of the present disclosure, wherein a computation result is computed from two measurement outcomes and using computation instructions retrieved from the ledger database;
Fig. 3 schematically illustrates the identities and references within the ledger database according to Fig. 2;
Fig. 4 and 5 schematically illustrate the registration of identities on the blockchain of a sensor and of an instruction certification authority;
Fig. 6 schematically shows a third embodiment of the present disclosure, wherein the measurement outcome is encrypted and the computation operates on the encrypted measurement outcome; and
Fig. 7 schematically shows a fourth embodiment of the present disclosure concerning a connected car use-case, wherein a car manufacturer filters and processes the measurement outcomes.

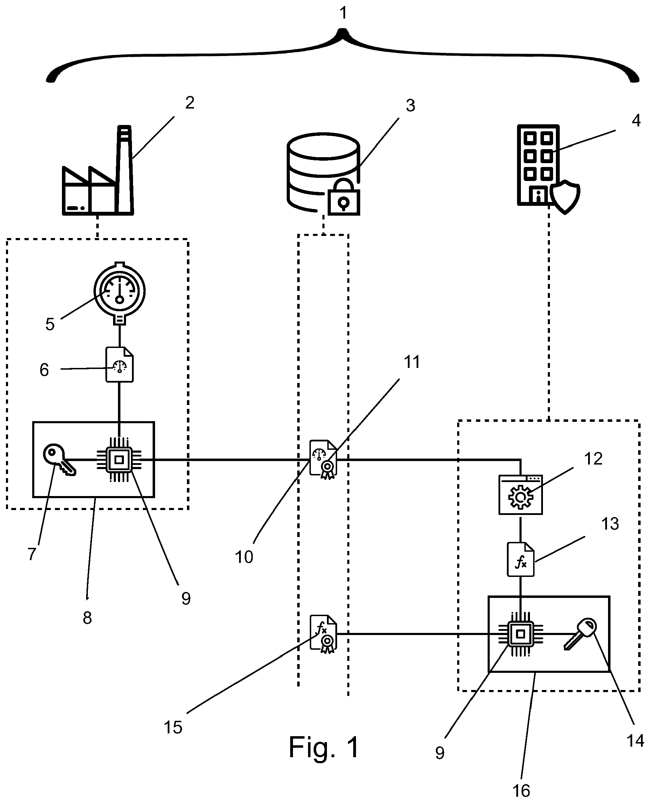

Fig. 1 shows a system 1 comprising a production facility 2, a ledger database 3 and a processor 4. The production facility 2 has at least one sensor 5. In Fig. 1 the production facility 2 is schematically shown with only a single sensor 5 for the sake of simplicity. The production facility 2 performs a production process. The sensor 5 measures a process parameter during the production process. From the measurement the sensor obtains a measurement outcome 6 indicated by a sheet with a scale. The sensor 5 cryptographically attests the measurement outcome 6 using a digital identity 7. The digital identity 7 is indicated by a key. Specifically, the key is a private key stored in a secure element 8 integrated with or securely attached to the sensor 5. The secure element 8 comprises a cryptoprocessor 9 for securely accessing and using the digital identity 8. Either way, the digital identity 7 used by the sensor 5 is physically and logically associated with the sensor 5. The sensor 5 submits the attested measurement outcome 10 to the ledger database 3. The attested measurement outcome 10 is indicated by a sheet with the scale and a seal 11. The seal 11 represents a digital signature of the measurement outcome 6. In this embodiment, the measurement outcome 6 is stored in the ledger database 3 in a publicly readable format. This is useful for attesting process data where the value for third parties lies in the process product and not in the process data itself. The process data serves as a quality assurance for the process product.

In this embodiment, the processor 4 uses an embedded program 12. The embedded program 12 comprises a collection of computation instructions, for example a particular sequence of computation instructions to be performed in order to obtain a computation result. At least one of the computation instructions comprises a sensor reference. The sensor reference is to the digital identity 7 associated with the sensor 5.

Before performing the computation instruction using the measurement outcome 6, the processor 4 receives the attested measurement outcome 10. For that purpose, the processor 4 queries the ledger database 3 for the most recent attested measurement outcome 10 submitted by the sensor 5 referenced by the sensor reference. The ledger database 3 responds to the processor 4 by providing and transmitting the most recent suitable (signed and attested) measurement outcome 10. The processor 4 then computes a computation result 13 from the attested measurement outcome 10 by applying and carrying out the one or more instructions of the program 12 to the measurement outcome 6. The obtained computation result 13 is indicated by a sheet with a formula sign "fx".

The computation instructions for example contain information for transforming the measurement outcome 6 into a derived process parameter. Such a transformation may employ know-how about the process of the production facility 2, which can be embedded in the computation instructions. For example, there might be known (static or constant) properties of that process, which permit to transform the measurement outcome 6 into a more meaningful computation result 13. The processor 4 digitally signs the computation result 13 using a digital identity 14. Again, the digital identity 14 is indicated by a key, which is now a different key than that of the sensor 5. This digital identity 14 is associated with the processor 4 (or, optionally with the program 12). The processor 4 submits the signed computation result 15 to the ledger database 3.

In this example, the measurement outcome 6 and the computation result 13 are submitted to the same ledger database 3. This is not necessary, but advantageous in order to provide a traceable history of computation results and of the measurement outcomes they are based on within the same ledger database. A single cohesive ledger database guarantees meaningful and reproducible relationships and sequences between measurement outcomes and derived computation results.

Fig. 1 thus illustrates a simple embodiment of the disclosed method for generating a cryptographically secure derived process data. The derived process data is the computation result 13. It is cryptographically secure because it is obtained from a cryptographically verified input, the attested measurement outcome 10, and represented by a cryptographically attested output, the digitally signed computation result 15. For that purpose, the sensor 5 and the processor 4 are both associated with their own digital identity 7, 14 indicated by two different keys. Both of their keys are managed in a secure element 8, 16 embedded with the sensor 5 and the processor 4 respectively. For obtaining this cryptographically secure derived process data, the following steps are carried out:

The sensor 5 performs a measurement of a process parameter. The process parameter can be any physical parameter related to the supervised process. In the case of a production process, it can for example be a pressure value of a pressured fluid connection or of a pressure tank. This is indicated schematically by a pressure gauge. The sensor 5 employs its secure element 8 to cryptographically attest the measurement outcome 6 using the digital identity 7. The sensor 5 then submits the attested measurement outcome 10 to the ledger database 3. The attested measurement outcome 10 is submitted to the ledger database 3 together with one or more measurement parameters. The measurement parameters submitted together with the attested measurement outcome 10 are selected from a group comprising: timestamp, geographic location, ambient temperature, ambient pressure, error message of the sensor, warning message of the sensor. In the present example, the pressure value forming the measurement outcome 6 is submitted together with a timestamp of the measurement and any available error message of warning message of the sensor 5. These measurement parameters are attested together with the measurement outcome 6. That is, the secure element 8 generates a digital signature over a measurement record comprising the measurement outcome 6 and the measurement parameters. The complete record and digital signature are then submitted to the ledger database 3.

The processor 4 runs the embedded program 12. The program 12 asks for an input in the form of a measurement outcome 6 of an identified sensor. The processor 4 therefore queries the ledger database 3 and fetches the attested measurement outcome 10 previously submitted by the identified sensor 5. The processor 4 verifies the validity of the attestation of the attested measurement outcome 10.

From the attested measurement outcome 10 and the computation instructions of the program 12, the processor 4 computes the computation result 13. The processor 4 is implemented in a trusted execution environment (TEE). The TEE is a specialized hardware component within a general-purpose central processing unit (CPU). The at least one computation instruction is locked inside the trusted execution environment. The trusted execution environment guarantees the content (authenticity and integrity) of the computation instructions carried out by the processor 4. If the computation within the trusted execution environment is successful and the validity of the attestation of the attested measurement outcome 10 provided as an input to the trusted execution environment has been positively verified, the processor 4 then employs its secure element 16 to digitally sign the computation result 13 using its digital identity 14. Finally, the processor 4 submits the signed computation 15 result back to the ledger database 3.

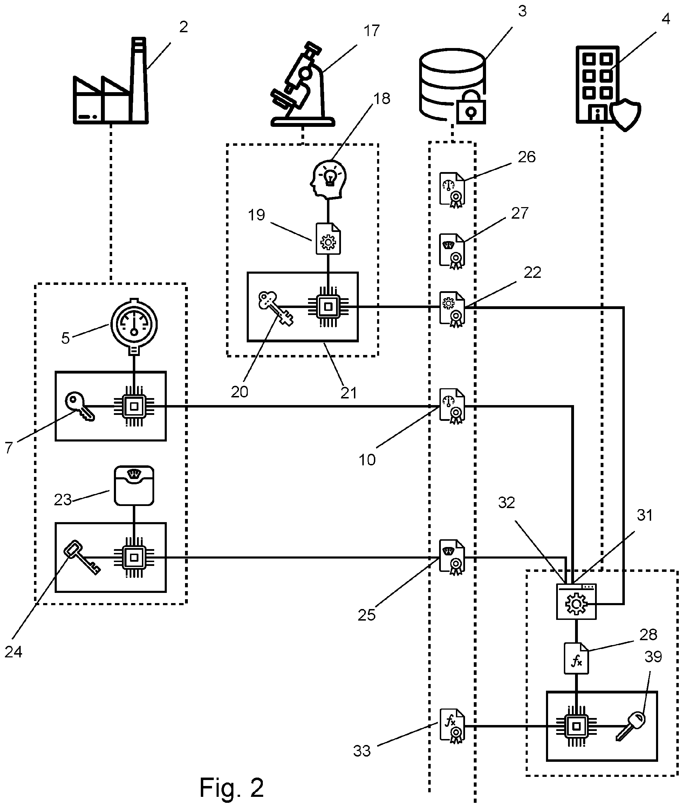

A second, more extensive example is illustrated in Fig. 2. In addition to the production facility 2, the ledger database 3 and the processor 4, the fourth participant is the instruction provider 17. The instruction provider 17 is schematically indicated by a microscope. For example, a person such as a researcher 18 comes up with a program 19 comprising the one or more instructions for transforming a measurement outcome into derived process data. The program 19 is indicated by a sheet with a gear wheel. The instruction provider 17 has its own digital identity 20 indicated by yet another key managed in a secure element 21. In order to contribute their program 19 in the present framework, the instruction provider 17 digitally signs their newly developed program 19 with their digital identity 20. Then they submit the digitally signed program 22 to the ledger database 3 for anyone to verify and use.

The production facility 2 in this example has not only one, but two sensors 5, 23. Each sensor 5, 23 has its own associated digital identity 7, 24. They both submit measurement outcomes 10, 25 attested by the respective digital identity 7, 24 to the ledger database 3. Over time, the ledger database 3 stores measurement outcomes from different times of the production process. Previous attested measurement outcomes 26, 27 are maintained in the history of the ledger database 3. The processor 4 when running the program 19 accesses only the most recent of each type of measurement outcome.

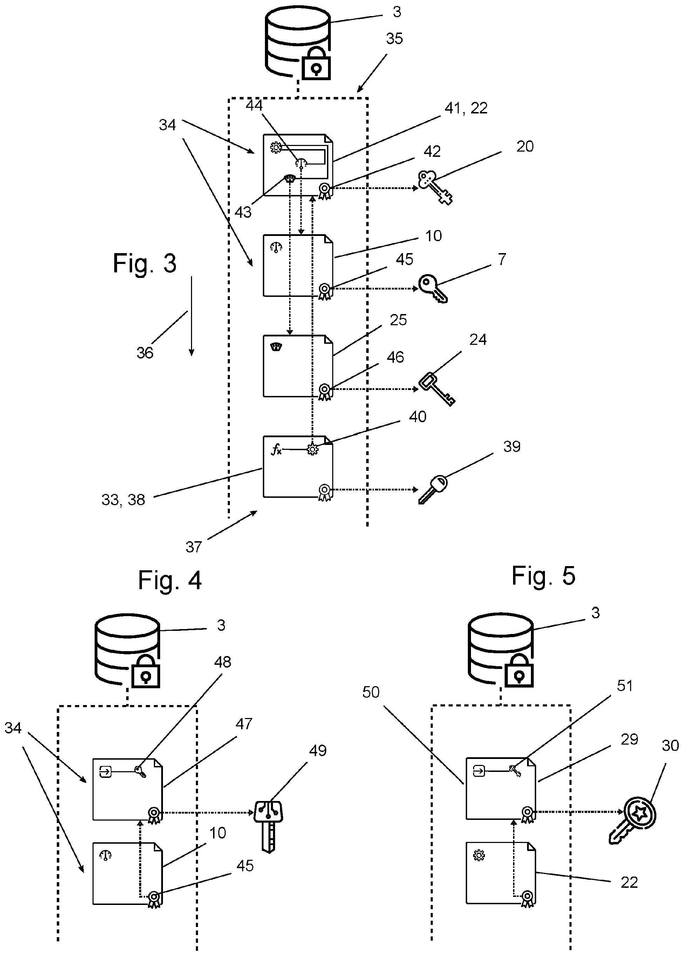

In this example, the processor 4 does not rely purely on an embedded program, but before computing the computation result 28 the processor 4 queries the ledger database 3 for an updated program and receives the most recent program 22 with the at least one computation instruction. As indicated above, the at least one computation instruction is digitally signed by the instruction provider 17. The processor 4 verifies the validity of the signature of the at least one computation instruction. For this purpose, as a first step, the processor determines the digital identity 20 associated with the signature, i.e., of the instruction provider 17 having generated the digital signature of the computation instructions. The processor verifies whether that digital identity 20 of the instruction provider is certified by a valid certificate 29 (see Fig. 5). A certificate 29 is valid for this purpose when it is issued by a certification authority, wherein the digital identity 30 of the certification authority is on a whitelist of instruction certification authorities. The processor 4 stores such a whitelist in an embedded secure memory for the purpose of performing these kinds of verifications. That way, the authenticity of the computation instructions employed by the processor 4 can be relied upon. In other words, the content of the computation instruction is attested by the instruction provider 17, whose identity 20 in turn is attested by an accepted (by way of whitelisting) instruction certification authority. The processor 4 is merely required to attest to the accurate execution of those computation instructions, which is achieved by the TEE.

The program 19 of the example shown in fig. 2 uses two measurement outcomes of different types. In other words, they concern different process parameters. The first required measurement outcome is a pressure value, similar to the example in fig. 1, provided by a pressure gauge acting as a first sensor 5. The second required measurement outcome is a weight value provided by a scale acting as a second sensor 23. In order to avoid errors in creating sensor relationships suitable for supplying parameters to a given program, the at least one computation instruction comprises type constraints defining acceptable measurement types of the measurement outcomes to be used together with the program 19. In this example, the program 19 may define that a first input parameter 31 must be a pressure value and a second input parameter 32 must be a weight value. The certificate of the digital identity associated with each of the sensors 5, 23 defines the measurement type for which the gauge or scale are calibrated and attested respectively. The digital identity 7 of the pressure gauge can only be validly used to attest pressure measurement outcomes and the digital identity 24 of the scale can only be validly used to attest weight measurement outcomes. Before computing the computation result 28 the processor 4 verifies that the type constraints are respected, i.e., the computation uses only values attested from a digital identity valid for providing pressure measurements for the first required measurement outcome and only values attested from a digital identity valid for providing weight measurements for the second required measurement outcome. The signed computation result 33 is submitted to the ledger database 3 together with references to the attested measurement outcomes 10, 25 in the ledger database 3.

Fig. 3 illustrates the identities and attestations and references within the ledger database 3 more in detail. The ledger database 3 is illustrated as a chronological list of entries 34, starting at the top 35 and adding new entries in the vertical direction 36 at the bottom 37. The most recent entry 38 stored in the ledger database 3 shown at the very bottom is the signed computation result 33. The signature of the signed computation result 33 refers to the digital identity 39 of the processor 4. The entry of the computation result comprises a reference 40 to another entry 41 containing the program 22. The program 22 defines the at least one instruction that have been performed in order to obtain the computation result 33. The program entry 41 in the ledger database 3 is shown at the very top. The signature 42 of the program 22 refers to the digital identity 20 of the instruction provider 17. The program 22 itself defines the type of two input parameters 31, 32. Based on these type references, the most recent attested measurement outcomes 10, 25 stored in the ledger database 3 and having a suitable type are referenced from the program 22. In this simplified example, the type references can be directly mapped to sensor references 43, 44, because there is only one suitable sensor for each type of measurement outcome. Alternatively, the processor 4 may include direct references with the signed computation result 33 that point to the particular measurement outcomes that have been used in obtaining it. The signature 45 of the first measurement outcome 10 refers to the digital identity 7 of the first sensor 5. The signature 46 of the second measurement outcome 25 refers to the digital identity 24 of the second sensor 23.

Fig. 4 and 5 further illustrate the certification path and registration of sensors and processes, which can also be documented in a traceable manner in the ledger database 3. Generally, while the ledger database 3 is indicated with different entries 34 in Fig. 2, 3, 4 and 5, all those entries 34 can be part of the same ledger database 3. Each drawing indicates only a selection of entries necessary for describing different aspects of the present disclosure. These lists of entries 34 are non-exclusive. For example, the first sensor 5 is a gauge calibrated and attested by a sensor certification authority. The cryptographical attestation of the measurement outcome 10 comprises a digital signature 45 of the measurement outcome by the digital identity 7 associated with the sensor 5. The digital identity 7 associated with the first sensor 5 is certified by the sensor certification authority. This is accomplished by including a registration record 47 in the ledger database 3, which comprises a reference 48 to the digital identity 7 of the sensor 5. The registration record 47 is digitally signed with the digital identity 49 of the sensor certification authority. The processor 4 stores a whitelist of sensor certification authorities. The processor 4 verifying the validity of the signature 45 of the measurement outcome 10 includes verifying that the digital identity 7 of the sensor is certified by a valid certificate issued by one of the certification authorities on the whitelist. Similarly, the digital identity 20 of the instruction provider 17 can be attested by a registration record 50 stored in the ledger database 3, wherein this registration record 50 comprises a reference 51 to the digital identity 20 of the instruction provider 17 and is digitally signed with the digital identity 30 of an instruction provider certification authority.

One particularly advantageous use-case of the present disclosure is for generating a quality certificate for a product of a production process. For the purpose of providing a quality certificate or generally providing information allowing for a quality audit of a production process, the signed computation result 33 can be submitted to the ledger database 3 together with a product identifier. The product identifier can be used to link the information stored in the ledger database 3 to the actual physical product or article. For example, the product identifier may be attached to the product or article itself when it leaves the production process. In another example, the product identifier may be linked to a batch of products and/or to a particular time stamp when a product has been completed or delivered. The product identifier may also be associated with the product via intrinsic physical properties of the product, for example unique or sufficiently random properties that can be determined from the product. There may be a reference table (on the ledger database or external to it) storing associations between such intrinsic properties and corresponding product identifiers.

Specifically, the signed computation result 33 and the product identifier can be submitted to the ledger database 3 as a transaction. The recipient of the transaction is a producer of the product of the production process. This recipient is identified by their digital identity.

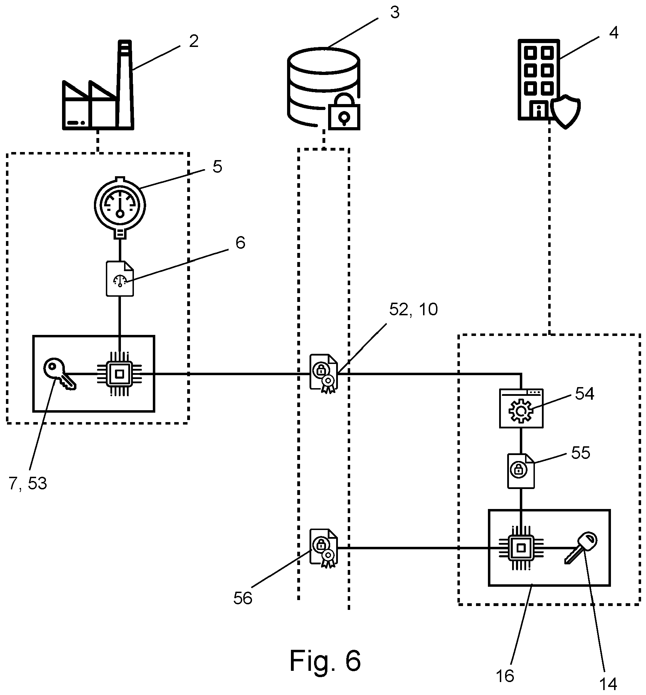

The third embodiment, which is illustrated in Fig. 6, is a variation of the first embodiment shown in Fig. 1. In this embodiment, the attested measurement outcome 52 is an encrypted version of the measurement outcome 6 provided by the sensor 5. The encryption key can be cryptographically associated with the digital identity 7 associated with the sensor 5. Alternatively, the encryption key can be a separate key, for example, a shared secret 53 embedded in the secure element of the sensor 5 and unknown to the processor 4. In the present embodiment, the attested measurement outcome 10 is obtained using a homomorphic encryption scheme. Homomorphic encryption is a known technique and there are several cryptosystems available, depending on the type of operations that need to be performed. The most general (in fact arbitrary) operations are possible in fully homomorphic encryption (FHE) cryptosystems. There are several open-source FHE libraries available implementing different FHE schemes, such as HElib, PALISADE or Lattigo. Because the processor 4 does not have the decryption key, the at least one computation instruction of the program 54 in this embodiment needs to be a homomorphic operation compatible with the employed homomorphic encryption cryptosystem. Consequently, the computation result 55 also remains encrypted, as well as the signed computation result 56 that the processor 4 submits to the ledger database 3.

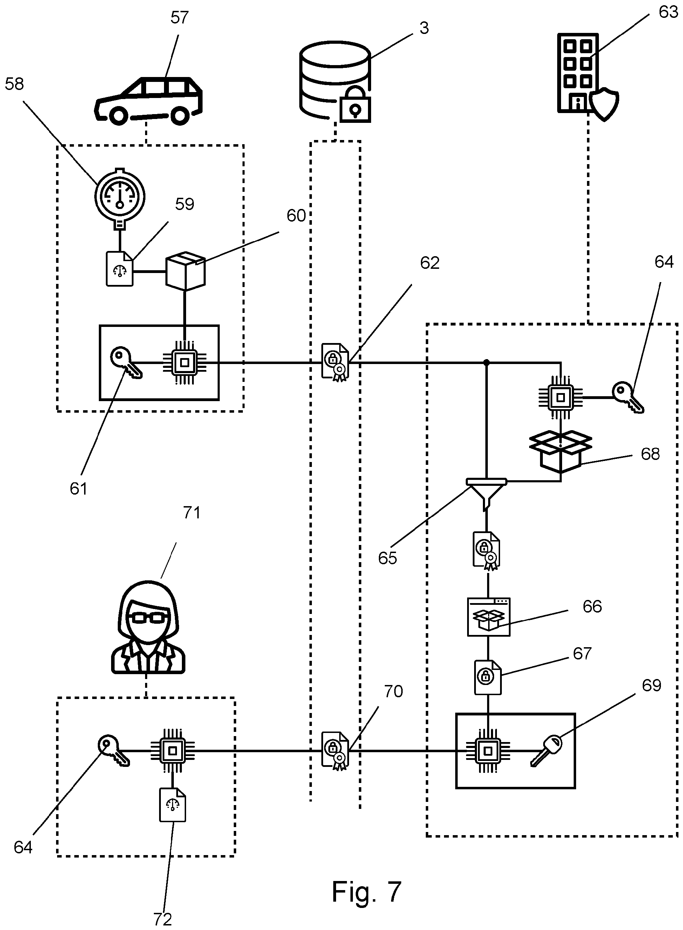

A fourth embodiment is illustrated in Fig. 7. This is an extension of the third embodiment shown in Fig. 6. This fourth embodiment concerns the use case of a connected car 57 submitting data to a ledger database 3. The connected car 57 takes the place of the production facility and the previous embodiments. More specifically, the sensor 58 measures the tyre pressure 59 of one of the car wheels. The tyre pressure 59 is submitted to the ledger database 3 together with a current timestamp and the geographic location of the car, all in a package 60 that is encrypted and signed (and thereby attested) with the digital identity 61 of the sensor 58. For example, in regular intervals or after every measurement, the connected car 57 submits the attested package 62 comprising the tyre pressure 59 (i.e., the measurement outcome) to the ledger database 3.

In this example, the processor 63 is provided by the car manufacturer and has a copy of the decryption key 64 (also referred to as unblinded key). The processor 63 watches the ledger database 3 and fetches newly submitted attested packages 62 containing an attested measurement outcome. More precisely, the package 60 is attested and the measurement outcome, that is, the tyre pressure 59, is attested indirectly because it is contained in the attested package 62. The car manufacturer being the processor 63 needs to filter 65 and unpack 66 the data submitted by the connected car 57. They have an interest of keeping secret the exact format of the packaging and also need the option of filtering the amount of data that can be accessed by downstream data consumers. For example, the package 60 may contain confidential information related to the inner functioning of the connected car 57 or its subsystems, which the car manufacturer does not intend to share. Therefore, after fetching and receiving the attested package 62 containing the measurement outcome by the processor 63 and before computing the computation result 67, the processor 63 decrypts the package with a secret decryption key 64 matching the digital identity 61 of the sensor 58, unpacks 68 the decrypted package and performs a filtering and selecting 65 of the attested measurement outcome. That is, the filtering and selecting 65 comprises decrypting the attested measurement outcome, and applying one or more predefined filtering criteria to the decrypted measurement outcome. In this process, some of the encrypted packages are filtered out and not selected for further processing. Only the remaining encrypted packages are processed by applying the homomorphic operations of the program. In the present example, those operations unpack 66 the measurement outcome 59 inside the encrypted package without decrypting it. Naturally, the digital signature of the sensor is not valid any longer for the transformed data. The computation result 67, which is the unpacked and still encrypted measurement outcome 59 is therefore digitally signed with the digital identity 69 of the processor 63 and submitted to the ledger database 3. In other words, submitting the signed computation result 70 computed from the attested measurement outcome is in response to the corresponding measurement outcome passing the one or more filtering criteria.

Finally, for accessing and for example statistically evaluating the tyre pressure 59, a data consumer 71 retrieves the signed computation result 70 from the ledger database 3. They receive an unblinding key 64 from the car manufacturer, for example by purchasing a data licence and/or by obtaining an authorisation for accessing data from their own connected car 57 during which the connection between the data consumer 71 and the identity of the car (and thus the sensor) is verified. The obtained unblinding key 64 corresponds to the encryption key cryptographically associated with the digital identity 61 associated with the sensor 58, because the processor 63 operated homomorphically on the encrypted data and thus did not re-encrypt the measurement outcome 59. The data consumer 71 decrypts the computation result 67 using the unblinding key 64 to obtain an unblinded computation result 72. In this example, the unblinded computation result 72 is the unpacked measurement outcome 59 from the tyre pressure sensor 58.

## Claims

1. Method for generating a cryptographically secure derived process data, the method comprising:
performing a measurement of a process parameter using a sensor (5),
cryptographically attesting the measurement outcome (6) using a digital identity (7) associated with the sensor (5),
submitting the attested measurement outcome (10) to a ledger database (3),
receiving the attested measurement outcome (10) by a processor (4),
computing a computation result (13) from the attested measurement outcome (10) and at least one computation instruction,
digitally signing the computation result (13) using a digital identity (14) associated with the processor (4),
submitting the signed computation result (15) to the ledger database (3).

2. Method according to claim 1, **characterised in that** the signed computation result (15) is submitted to the ledger database (3) together with references to the attested measurement outcome in the ledger database (3).

3. Method according to claim 1 or 2, **characterised in that** the at least one computation instruction comprises a sensor reference (44) to the digital identity (7) associated with the sensor (5), wherein receiving the measurement outcome (6) includes querying the ledger database (3) for the most recent signed measurement outcome submitted by the sensor (5) referenced by the sensor reference (44).

4. Method according to any one of claims 1 to 3, **characterised in that** after receiving the attested measurement outcome (10) by a processor (4) and before digitally signing the computation result (13) the processor (4) verifies the validity of the attestation of the attested measurement outcome (10).

5. Method according to any one of claims 1 to 4, **characterised in that** the sensor (5) is a gauge calibrated and attested by a sensor certification authority, wherein the cryptographical attestation of the measurement outcome (6) comprises a digital signature (45) of the measurement outcome (6) by the digital identity (7) associated with the sensor (5), and wherein the digital identity (7) associated with the sensor (5) is certified by the sensor certification authority.

6. Method according to claims 4 and 5, **characterised in that** the processor (4) stores a whitelist of sensor certification authorities, wherein the processor (4) verifying the validity of the signature (45) of the measurement outcome (6) includes verifying that the digital identity (7) of the sensor (5) is certified by a valid certificate issued by one of the certification authorities on the whitelist.

7. Method according to any one of claims 1 to 6, **characterised in that** the attested measurement outcome (10) is an encrypted version of the measurement outcome (6) provided by the sensor (5), wherein the encryption key is cryptographically associated with the digital identity (7) associated with the sensor (5).

8. Method according to claim 7, **characterized in that** the attested measurement outcome (10) is obtained using a homomorphic encryption scheme, and wherein the at least one computation instruction is a homomorphic operation.

9. Method according to claim 7 or 8, **characterized in that** after receiving the attested measurement outcome (10) by a processor (4) and before computing the computation result (13), the processor (4) performs a filtering and selecting of the attested measurement outcome (10), wherein the filtering and selecting comprises decrypting the attested measurement outcome (10), and applying one or more predefined filtering criteria to the decrypted measurement outcome, wherein submitting the signed computation result (15) computed from the attested measurement outcome (10) is in response to the corresponding measurement outcome passing the one or more filtering criteria.

10. Method according to any one of claims 7 to 9, **characterised in that** it comprises retrieving the signed computation result (15) from the ledger database (3), receiving an unblinding key (64) which corresponds to the encryption key cryptographically associated with the digital identity (7) associated with the sensor (5), and decrypting the computation result (13) using the unblinding key (64) to obtain an unblinded computation result (72) .

11. Method according to claim 6, **characterised in that** the at least one computation instruction comprises a type constraint defining an acceptable measurement type of the measurement outcome (6), wherein the certificate of the digital identity (7) associated with the sensor (5) defines the measurement type for which the gauge is calibrated and attested, wherein before computing the computation result (13) the processor (4) verifies that the type constraint is respected.

12. Method according to any one of claims 1 to 11, **characterised in that** the processor (4) is implemented in a trusted execution environment.

13. Method according to claim 12, **characterised in that** the at least one computation instruction is locked inside the trusted execution environment.

14. Method according to any one of claims 1 to 13, **characterised in that** before computing the computation result (13) the processor (4) receives the at least one computation instruction, wherein the at least one computation instruction is digitally signed, and the processor (4) verifies the validity of the signature of the at least one computation instruction.

15. Method according to claim 14, **characterised in that** the processor (4) verifying the validity of the signature of the at least one computation instruction includes verifying that the digital identity (20) associated with the signature is certified by a valid certificate issued by a certification authority on a whitelist of instruction certification authorities stored by the processor (4).

16. Method according to any one of claims 1 to 15, **characterised in that** the attested measurement outcome (10) is submitted to the ledger database (3) together with one or more measurement parameters selected from a group comprising: timestamp, geographic location, ambient temperature, ambient pressure, error message of the sensor, warning message of the sensor.

17. Use of the method according to any one of claims 1 to 16 for generating a quality certificate for a product of a production process.

18. Use according to claim 17, **characterised in that** the signed computation result (15) is submitted to the ledger database (3) together with a product identifier.

19. Use according to claim 18, **characterised in that** the submission of the signed computation result (15) and the product identifier has the form of a transaction to a digital identity of a producer of the product.

20. System comprising a production facility (2) having at least one sensor (5) and at least one processor (4), wherein the production facility (2) is configured for performing a production process, wherein the sensor (5) is configured for performing a measurement of a process parameter of the production process and cryptographically attesting the measurement outcome (6) using a digital identity (7) associated with the sensor (5) and submitting the attested measurement outcome (10) to a ledger database (3), wherein the processor (4) is configured for receiving the attested measurement outcome (10) and computing a computation result (13) from the attested measurement outcome (10) and at least one computation instruction and digitally signing the computation result (13) using a digital identity (14) associated with the processor (4) and submitting the signed computation result (15) to the ledger database (3).
